Europäisches Patentamt

**European Patent Office**

**Office européen des brevets**

(11) Veröffentlichungsnummer: **0 105 392**
**B1**

(12) **EUROPÄISCHE PATENTSCHRIFT**

(45) Veröffentlichungstag der Patentschrift:
**01.07.87**

(21) Anmeldenummer: **83109209.3**

(22) Anmeldetag: **16.09.83**

(51) Int. Cl.⁴: **H 02 K 5/14, H 01 R 39/38**

(54) Kasten-Bürstenhalter für einen Elektro-Kommutatormotor.

(30) Priorität: **29.09.82 DE 3236091**

(43) Veröffentlichungstag der Anmeldung:
**18.04.84 Patentblatt 84/16**

(45) Bekanntmachung des Hinweises auf die Patenterteilung:
**01.07.87 Patentblatt 87/27**

(84) Benannte Vertragsstaaten:
**CH DE FR GB IT LI NL SE**

(56) Entgegenhaltungen:
**DE-A-2 121 710**
**DE-A-2 130 430**
**DE-A-2 756 729**

(73) Patentinhaber: **Siemens Aktiengesellschaft Berlin und München, Wittelsbacherplatz 2, D-8000 München 2 (DE)**

(72) Erfinder: **Adam, Peter, Allerseeweg 25, D-8706 Höchberg (DE)**
Erfinder: **Ihle, Olai, Thoma- Rieder- Strasse 10, D-8702 Margetshöchheim (DE)**

EP 0 105 392 B1

**Beschreibung**

Die Erfindung bezieht sich auf einen Kasten-Bürstenhalter für einen Elektro-Kommutatormotor mit an einer Bürstentragplatte jeweils mit ihren Rückseiten gehaltenen Bürstenkästen mit darin geführten, durch eine Andruckfeder gegen die Oberfläche eines Kommutators gedrückten Bürsten; ein derartiger Kasten-Bürstenhalter ist durch eine offenkundige Vorbenutzung bekannt.

Die Grundeinheit des bekannten Kasten-Bürstenhalters besteht aus einer schalenförmigen, in ihrer Seiten-Außenkontur der Innenumfangsfläche des Ständergehäuses eines Elektromotors angepaßten Bürstentragplatte, die kommutatorseitig in das Ständergehäuse einsteckbar ist und dabei mit einer Mittelöffnung in ihrer Bodenfläche den Kommutator umfaßt. An der Bodenfläche sind in dem Freiraum zwischen der Mittelöffnung und den Seitenflächen u.a. Bürstenkästen mit ihrer Rückseite einstückig angeformt, in die von radial außen durch Schraubenfedern angedrückte Kohlebürsten einschiebbar sind. Die Bürstenkästen weisen ein allseitig die Kohlebürste umfassendes geschlossenes einstückiges Rechteck bzw. Quadratprofil auf; nach radial außen ist der Bürstenkasten nach dem Einschieben von Kohlebürste und Schrauben durch einen von radial außen zuzuführenden und zu verrastenden Deckel verschließbar.

Aufgabe der vorliegenden Erfindung ist die Schaffung einer Kasten-Bürstenhalter-Konstruktion, bei der die wesentlichen, von der Grundeinheit der Bürstentragplatte aufzunehmenden Funktionselemente, wie u.a. die Kohlebürsten, die Andruckfedern sowie ggf. Entstördrosseln und ein Temperaturwächter aus nur einer Montagerichtung und somit ohne Drehen und Wenden der Grundeinheit zuführ- und festlegbar sind.

Die Lösung dieser Aufgabe gelingt bei einem Kasten-Bürstenhalter der eingangs genannten Art durch die kennzeichnende Lehre des Patentanspruchs 1; vorteilhafte Ausgestaltungen der Erfindung sind jeweils Gegenstand der Unteransprüche.

> Die erfindungsgemäße Konstruktion eines Kasten-Bürstenhalters erlaubt das Einlegen der Bürsten in axialer Vorzugs-Montagerichtung in die axial zunächst offenen, U-förmigen Bürstenkästen und das anschließende, ebenfalls in gleicher Montagerichtung mögliche Aufstecken des Abschlußdeckels. Der Abschlußdeckel ist in besonders vorteilhafter Weise an den Seitenschenkeln des U-förmigen Bürstenkasten-Profils durch Rastverschlusse fixierbar. Zweckmäßigerweise ist vor dem Einlegen der Kohlebürsten die jeweilige Anschlußlitze bereits durch eine zur Durchführung dieser Anschlußlitze vorgesehene Öffnung in Anschlußdeckel durchgefädelt; der Abschlußdeckel wird somit beim Einlegen der Kohlebürste als loses Bauteil mit durchgesteckter Anschlußlitze gleichzeitig mitzugeführt und kann anschließend mit den Schenkeln des Bürstenkastens verrastet werden.

In gleicher Montagerichtung wie die Kohlebürsten und der Abschlußdeckel wird die als Andruckfeder vorgesehene Schenkelfeder montiert und dabei zweckmäßigerweise zunächst ohne Federspannung lediglich bis zu einer Vormontagelage auf den Zapfen aufgesteckt, in der die Schenkelfeder vor Erreichen ihrer endgültigen, eingerasteten und gespannten Bürstenauflagestelle mit ihrem Andruckschenkel und ihren Gegendruckschenkel lediglich gegen die Bürstenkasten-Außenkontur anliegt. Nach Montage des kompletten Bürstensystems im Motor kann dann in vorteilhafter Weise die Feder aus ihrer Vormontagelage bei gleichzeitiger gegenseitiger Verspannung der Schenkel in ihre Arbeitsstellung axial weitergeschoben werden, in der sie mit ihren Andruckschenkeln in den Bürstenkasten ragt und auf der Oberseite der Kohlebürste axial fixiert aufliegt und mit ihrem Gegendruckschenkel an einer Anlage des einen Schenkel jeden Bürstenkastens anliegt.

In gleicher axialer Montagerichtung sind in vorteilhafter Weise auch weitere elektrische Funktionsteile wir z. B. Entstördrosseln oder Thermowächter zugeführt und in der Bürstentragplatte gehalten. Zur Kontaktierung und Verbindung der Bürstenanschlüsse, der Entstördrosseln, des Thermowächters und der äußeren elektrischen Zuleitung ist nach einer weiteren Ausgestaltung der Erfindung vorgesehen, daß die Schenkelfedern derart auf ihre jeweiligen Zapfen aufgesteckt sind, daß jeweils der Gegendruckschenkel außen an einem Seitenschenkel und an- und der Andruckschenkel außen am Abschlußdeckel aufliegt.

In vorteilhafter Weise ist zusätzlich vorgesehen, daß in der Rückseite der Bürstentragplatte in axialer Richtung verlaufende Einsteckschlitze und Rohrnieten angebracht sind, in die über die Rückseite hinaus stehende elektrische Anschlußteile von in der Bürstentragplatte gehaltenen elektrischen Bauelementen bzw. elektrischen Verbindungsleitungen eingesteckt und durch Verlöten ihrer durchgesteckten und über die Rückseite hinausragenden freien Enden kontaktiert sind.

Die Erfindung sowie weitere vorteilhafte Ausgestaltungen der Erfindung werden im folgenden anhand eines schematisch dargestellten Ausführungsbeispiels in der Zeichnung näher erläutert. Darin zeigen:

Fig. 1 eine Draufsicht in Montagerichtung auf die Bürstentragplatte eines Kasten-Bürstenhalters mit sämtlichen darin gelagerten Bauelementen,

Fig. 2 eine Seitenansicht des Kasten-Bürstenhalters gemäß Fig. 1,

Fig. 3 eine Rückansicht auf die Bodenfläche des Kasten-Bürstenhalters gemäß Fig. 1,

Fig. 4 einen Teilschnitt gemäß Schnittverlauf IV-IV des Kasten-Bürstenhalters in Fig. 1.

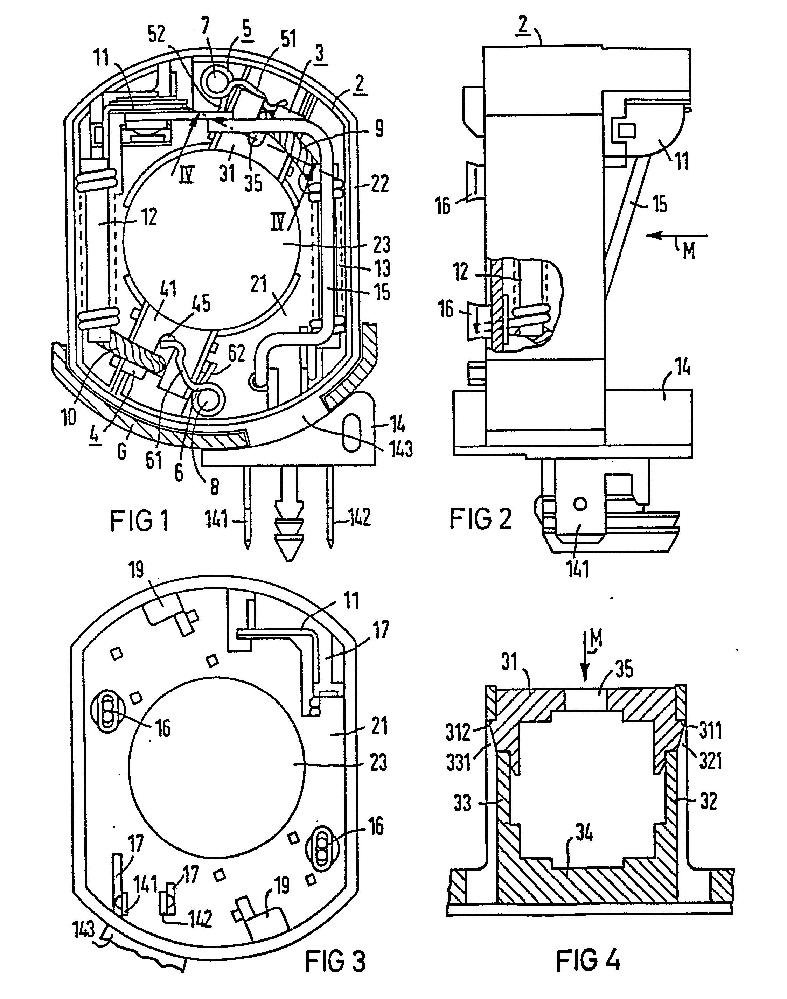

Fig. 1, 2 zeigen einen schalenförmigen Kasten-Bürstenhalter mit einer Bürstentragplatte 2, bestehend aus einer Bodenfläche 21 mit Mittelöffnung 23 und außen an die Bodenfläche 21 einstückig angeformter, axial vorstehender und in ihrer Kontur der Innenumfangsfläche eines mit seinem Gehäuse G in Fig. 1 angedeuteten Kommutator-Kleinmotors angepaßter Randfläche 22. Der derartig geformte Kasten-Bürstenhalter wird kommutatorseitig geführt in das Ständergehäuse eingesteckt und ragt mit einer radialen äußeren Anschlußeinhxeit 14 aus einer stirnseitig offenen Schlitzöffnung des Motorgehäuses G heraus. Äußere Anschlußeinheit 14 und Bürstentragplatte 2 sind durch einen in die Schlitzöffnung des Motorgehäuses G dabei eingeführten Steg 141 verbunden.

An die Bodenfläche 21 der Bürstentragplatte 2 sind mit ihrer Rückseite 34, 44 Bürstenkästen 2, 4 mit einem U-förmigen, zur Vorderseite und damit Montagerichtung M geöffneten und nach dem Einlegen der Bürsten durch einen Abschlußddeckel 31 bzw. 41 axial in Montagerichtung M verschließbaren Profil einstückig angeformt. Parallel zu jeweils einem der Seitenschenkel 32, 33 bzw. 42, 43 der Bürstenkästen 2, 4 verläuft jeweils ein ebenfalls mit seinem einen Ende an der Bodenfläche 21 der Bürstentragplatte 2 befestigter und mit seinem freien anderen Ende axial vorstehender Zapfen 7 bzw. 8, der zum Aufstecken von Schenkelfedern 5 bzw. 6 in Montagerichtung M dient.

Im oberen Teil der Fig. 1 ist die auf den Zapfen 7 aufgesteckte Schenkelfeder 5 in ihrer endgültigen Betriebsstellung gezeigt, in der sie mit einem Andruckschenkel 51 auf der Kohlebürste und mit ihrem Gegendruckschenkel an dem linken Schenkel des U-förmigen, durch einen Abschlußdeckel 31 verschlossenen Bürstenkastens 3 anliegt. Zur axialen formschlüssigen Sicherung der Andruckschenkel in ihrer endgültigen Betriebsstellung ist der entsprechende Seitenschenkel des Bürstenkastens mit einem randoffenen Einschnitt versehen, in den der Andruckschenkel nach dem vorherigen Überschieben über den übrigen Rand vor dem Einschnitt bei Erreichen seiner Betriebsstellung bis zur Auflage auf der Kohlebürste einrastet.

Im unteren Teil der Fig. 1 ist die auf den Zapfen 8 aufgesteckte Schenkelfeder 6 in einer Vormontagestellung gezeigt, in der sie mit gegenseitig noch ungespannten Schenkeln höchstens soweit auf den Zapfen 8 axial aufgesteckt ist, daß ihr Andruckschenkel 61 noch nicht in seine Bürstenauflagestellung gehoben ist; vorzugsweise ist diese Vormontagestellung derart vorgesehen, daß jeweils der Gegendruckschenkel außen an einem Seitenschenkel an- und der Andruckschenkel außen am Abschlußdeckel des jeweiligen Bürstenkastens aufliegt. Durch diese zweckmäßige Vormontagestellung ist es möglich, die Schenkelfedern 5 bzw. 6 bereits auf die Zapfen 7 bzw. 8 aufzustecken, ohne daß dabei gleichzeitig die Feder gespannt werden muß. Zweckmäßigerweise wird erst nach der Montage des kompletten Bürstensystems im Motor jeweils jeden Schenkelfeder 5 bzw. 6 durch radiales Anheben ihres Andruckschenkels 51, 41 auf den oberen Rand der Bürstenkästen gespannt und gleichzeitig auf dem Zapfen 7, 8 bis in ihre endgültige Betriebsstellung verschoben. Dabei können Federzughaken durch Öffnungen 18, 19 rückwärtig durch die Bodenfläche 21 der Bürstentragplatte 2 eingeführt werden.

Ebenso wie die Bürsten, Andruckfedern und Abschlußdeckel können auch die weiteren Funktionselemente wie insbesondere Entstördrosseln 12, 13 und ein Temperaturwächter 11 sowie innerhalb des schalenförmigen Kasten-Bürstenhalters geführte Anschlußleitungen 15 in der Montagerichtung M zugeführt und in der Bürstentragplatte 3 gehalten werden. Bei dem gesamten Füge- bzw. Montageablauf wird dabei zweckmäßigerweise die Bürstentragplatte 3 so gehalten, daß sämtliche Montageteile von oben in der Montagerichtung M zugeführt werden können. Dort wo flexible Litzen der Kohlebürsten bzw. Drähte der Entstördrosseln zu verbinden sind, werden zweckmäßigerweise durch die Bodenfläche 21 reichende Rohrniete 16 in dieser gehalten und die Litzen bzw. Drähte in diese Rohrniete 16 ein- bzw. bis über die Rückseite der Rohrniete durchgesteckt. In ebenfalls in die Bodenfläche 21 eingelassene schlitzförmige Öffnungen 17 sind einerseits feste Lötfahnen des Temperaturwächters 11 oder Steckerfahnen 141, 142 der äußeren Anschlußeinheit 14 und andererseits damit zu verbinde Drahtenden eingesteckt, die sich dabei an die Löt- bzw. Steckerfahnen anlegen. Durchbrüche 19 können zur Zuführung eines Werkzeuges dienen, wenn z. B. der Andruckschenkel der Schenkelfeder angehoben bzw. abgesenkt werden soll. Weitere nicht bezeichnete Durchbrüche in der Bodenfläche 21 dienen der axialen Zuführung von Formwerkzeugen beim Spritzgießen der Bürstentragplatte 2. Sämtliche durch die Bodenfläche 21 der Bürstentragplatte 2 nach hinten um ein kurzes Stück herausragenden Verbindungspunkte können in zweckmäßiger Weise nach der gesamten Montage des Kasten-Bürstenhalters, z. B. über ein Lötschwalbad miteinander verlötet werden.

Fig. 4 zeigt in einem vergrößerten Detailausschnitt die Verrastung des Abschlußdeckels 31 an den Seitenschenkeln 32, 33 des U-förmigen Bürstenkastens 3. Zur deutlicheren Darstellung ist die Kohlebürste nicht eingezeichnete. Wie aus Fig. 4 ersichtlich, ist der Abschlußdeckel 31 mit Rastnasen 311, 312 versehen, die in entsprechende Rastöffnungen 321, 331 der Seitenschenkel 32, 33 beim Aufstecken des Abschlußdeckels 31 in Montagerichtung M einrasten und den Abschlußdeckel nach dem Einlegen der Kohlebürste fixieren.

**Patentansprüche**

1. Kasten-Bürstenhalter für einen Elektro-Kommutatormotor mit an einer Bürstentragplatte (2) jeweils mit ihrer Rückseite gehalterten Bürstenkästen (3, 4) mit darin geführten, durch eine Andruckfeder (5, 6) gegen die Oberfläche eines Kommutators gedrückten Bürsten, dadurch gekennzeichnet, daß die Bürstenkästen (3, 4) ein U-förmiges, zur Vorderseite axial geöffnetes und nach dem Einlegen der Bürsten durch einen Abschlußdeckel (31 bzw. 41) axial verschließbares Profil (Seitenschenkel 32, 33 bzw. 42, 44; Rückwand 34 bzw. 44) aufweisen und eine jeweils als Andruckfeder vorgesehene Schenkelfeder (5 bzw. 6) axial auf das freie Ende eines an der Bürstentragplatte (2) befestigten, axial vorstehenden Zapfens (7 bzw. 8) bis zur Auflage ihres Andruckschenkels (51 bzw. 61) auf der Stirnfläche der Kohlebürste aufsteckbar ist.

2. Kasten-Bürstenhalter nach Anspruch 1, dadurch gekennzeichnet, daß der Abschlußdeckel (31 bzw. 41) mit einer Öffnung (35 bzw. 45) zur Durchführung der Anschlußlitze (9 bzw. 10) für die jeweilige Kohlebürste versehen ist.

3. Kasten-Bürstenhalter nach Anspruch 1 oder 2, dadurch gekennzeichnet, daß der Abschlußdeckel (31 bzw. 41) durch axiales Aufstecken mit den Seitenschenkeln (32, 33 bzw. 42, 43) der Bürstenkästen (3, 4) verrastbar (Rastnasen 311, 312, Rastöffnungen 321, 331) ist (Fig. 4).

4. Kasten-Bürstenhalter nach einem der Ansprüche 1 bis 3, dadurch gekennzeichnet, daß die Schenkelfedern (5 bzw. 6) jeweils mit ihren Gegendruckschenkeln (52, 82) gegen eine Anlage eines Seitenschenkels des Bürstenkastens (2 bzw. 3) anliegen.

5. Kasten-Bürstenhalter nach einem der Ansprüche 1 bis 4, gekennzeichnet durch eine Vormontagelage der Schenkelfedern (5 bzw. 6) in der die Schenkelfedern (5 bzw. 6) jeweils mit gegenseitig noch ungespannten Schenkeln höchstens soweit auf die Zapfen (7 bzw. 8) axial aufgesteckt sind, daß ihr Andruckschenkel (51 bzw. 61) noch nicht in seine Bürstenauflagestellung gehoben ist.

6. Kasten-Bürstenhalter nach Anspruch 5, dadurch gekennzeichnet, daß die Schenkelfedern (5 bzw. 6) derart auf ihren jeweiligen Zapfen (7 bzw. 8) aufgesteckt sind, daß jeweils der Gegendruckschenkel außen an einem Seitenschenkel und an- und der Andruckschenkel außen am Abschlußdeckel aufliegt.

7. Kasten-Bürstenhalter nach einem der Ansprüche 1 bis 6, dadurch gekennzeichnet, daß in der Rückseite der Bürstentragplatte (2) in axialer Richtung verlaufende Einsteckschlitze (17) und Rohrnieten (16) angebracht sind, in die über die Rückseite hinaus stehende elektrische Anschlußteile von in der Bürstentragplatte (2) gehaltenen elektrischen Bauelementen bzw. elektrischen Verbindungsleitungen eingesteckt und durch Verlöten ihrer durchgesteckten und über die Rückseite hinausragenden freien Enden kontaktiert sind.

8. Kasten-Bürstenhalter nach einem der Ansprüche 1 bis 7, dadurch gekennzeichnet, daß die Bürstentragplatte aus einem einstückigen, mit nur in axialer Montage- bzw. Montagegegenrichtung ziehbaren Formteilen herstellbaren Kunststoff-Spritzgußteil besteht.

**Claims**

1. A brush holder box for an electric commutator motor comprising brush boxes (3, 4) which are in each case supported at their rear side on a brush carrier plate (2) and have brushes guided therein which are pressed against the surface of a commutator by means of a pressure spring (5, 6), characterised in that the brush boxes (3, 4) have a U-shaped cross-section (side flanks 32, 33 and 42, 44; rear wall 34 and 44) which is axially open to the front and can be axially closed by a closing cover (31 or 41) after the insertion of the brushes and that a torsion spring (5 or 6) which is provided as a pressure spring in each case, can be axially positioned on the free end of an axially-projecting pin (7 or 8), attached to the brush carrier plate (2), until its pressure limb (51 or 61) contacts the end face of the carbon brush.

2. A brush holder box as claimed in claim 1, characterised in that the closing cover (31 or 41) is provided with an opening (35 and 45) through which the flexible lead (9 or 10) for the respective carbon brush is passed.

3. A brush holder box as claimed in claim 1 or 2, characterised in that the closing cover (31 or 41) can be locked, when it is axially placed in position, with the side walls (32, 33 or 42, 43) of the brush boxes (3, 4) (locking lugs 311, 312 locking openings 321, 331) (Fig. 4).

4. A brush holder box as claimed in one of claims 1 to 3, characterised in that the counter-pressure limbs (52, 82) of the torsion springs (5 or 6) in each case abut against an abutment on a side piece of the brush box (2 or 3).

5. A brush holder box as claimed in one of claims 1 to 4, characterised by a pre-assembly position of the torsion springs (5 or 6) in which the torsion springs (5 or 6) can each be axially positioned onto the pins (7 or 8), with their limbs still not under tension, only insofar as their pressure limbs (51 or 61) are not yet raised into the brush supporting position.

6. A brush holder box as claimed in claim 5, characterised in that the torsion springs (5 or 6) are placed onto their respective pins (7 or 8) in such manner that the counter-pressure limb abuts externally against a side piece and the pressure limb contacts the closing cover from outside.

7. A brush holder box as claimed in one of claims 1 to 6, characterised in that insertion slots (17) and tubular pins (16) are provided which extend in the axial direction through the rear of the brush carrier plate (2) and into which electrical terminal elements, projecting beyond the rear side, of electrical components and electrical connection lines carried in the brush carrier plate (2), are inserted and are contacted by soldering their inserted free ends which project beyond the rear side.

8. A brush holder box as claimed in one of claims 1 to 7, underlined characterised in that the brush carrier plate consists of an integral injection-moulded synthetic resin element which can be produced from moulded parts which can be drawn only in the axial assembly or dis-assembly directions.

**Revendications**

1. Boîte porte-balai pour un moteur électrique à collecteur, comportant des boîtes à balais (3, 4) portées chacune par leur face postérieure par une plaque de support des balais (2) et dans celles-ci des balais qui y sont guidés et qui sont appliqués par un ressort de pression (5, 6) contre la surface d'un collecteur, caractérisée par le fait que les boîtes à balais (3, 4) possèdent un profil en U (branches latérales 32, 33 ou 42, 44), par voie postérieure (34, 44), à face antérieure axialement ouverte et susceptible d'être fermé axialement, après mise en place des balais, par un couvercle d'obturation (31 ou 41) et qu'un ressort à branches (5 ou 6) prévu en tant que ressort de pression, est susceptible d'être monté sur l'extrémité libre d'un tourillon (7 ou 8) saillant axialement et fixé sur la plaque de support des balais, jusqu'à l'application de sa branche de pression (51 ou 61) contre la face frontale du balai de charbon.

2. Boîte porte-balai selon la revendication 1, caractérisée par le fait que le couvercle d'obturation (31 ou 41) est pourvu d'une ouverture (35 ou 45) pour le passage de la tresse de raccordement (9 ou 10) pour le balai de charbon concerné.

3. Boîte porte-balai selon la revendication 1 ou 2, caractérisée par le fait que le couvercle d'obturation (31 ou 41) est susceptible d'être encliqueté par enfichage axial avec les branches latérales (32, 33 ou 42, 43) des boîtes à balais (3, 4) (becs d'encliquetage 311, 312, ouvertures d'encliquetage 321, 331) (figure 4).

4. Boîte porte-balai selon l'une des revendications 1 à 3, caractérisée par le fait que les ressorts à branches (5 ou 6) portent chacun par leurs branches de pression antagonistes (52, 82) contre un appui d'une branche latérale de la boîte à balais (2 ou 3).

5. Boîte porte-balai selon l'une des revendications 1 à 4, caractérisée par une position de pré-montage des ressorts à branches (5 ou 6), dans laquelle les ressorts à branches (5 ou 6) sont chacun montés, avec des branches mutuellement non encore armées, axialement sur les tourillons (7 ou 8) de manière que leurs branches d'application (51 ou 61) ne soient pas encore soulevées dans leur position d'application des balais.

6. Boîte porte-balai selon la revendication 5, caractérisée par le fait que les ressorts à branches (5 ou 6) sont montés de telle façon sur leur tourillon respectif (7 ou 8) que la branche de pression antagoniste porte extérieurement contre une branche latérale du couvercle d'obturation et que la branche de pression porte extérieurement sur le couvercle d'obturation.

7. Boîte porte-balai selon l'une des revendications 1 à 6, caractérisée par le fait que dans la face postérieure de la plaque de support des balais (2) sont prévues dans le sens axial des fentes d'enfichage (17) et des rivets tubulaires (16), dans lesquels sont enfichés des composants électriques ou des conducteurs électriques de liaison, qui sont portés par la plaque de support des balais (2), en saillie sur la face postérieure de celle-ci, et sont contactés par soudure de leurs extrémités libres qui sont enfichées et qui débordent la face postérieure.

8. Boîte porte-balai selon l'une des revendications 1 à 7, caractérisée par le fait que la plaque de support des balais est constituée par une pièce de matière plastique extrudée, faite d'une pièce et avec des pièces moulées susceptibles d'être dégagées uniquement dans le sens axial de montage ou dans le sens inverse au montage.

FIG 1

FIG 2

FIG 3

FIG 4